(19) **Europäisches Patentamt**

**European Patent Office**

**Office européen des brevets**

(11) **EP 0 651 041 B1**

(12) **EUROPEAN PATENT SPECIFICATION**

(45) Date of publication and mention
of the grant of the patent:
**03.05.2000 Bulletin 2000/18**

(51) Int. Cl.[7]: **C10G 65/02**, C10G 49/02,
C10G 49/00, C10G 65/04,
B01J 37/04, B01J 35/02

(21) Application number: **94103004.1**

(22) Date of filing: **28.02.1994**

(54) **Graded catalyst system**

Gradiertes Katalysator System

Système de catalyseur gradé

(84) Designated Contracting States:
**BE DE ES FR GB IT NL**

(30) Priority: **28.10.1993 DK 121993**

(43) Date of publication of application:
**03.05.1995 Bulletin 1995/18**

(73) Proprietor: **Haldor Topsoe A/S**
**DK-2800 Lyngby (DK)**

(72) Inventor: **Bartholdy, Jesper**
**DK-2700 Bronshoj (DK)**

(74) Representative:
**Grünecker, Kinkeldey,**
**Stockmair & Schwanhäusser**
**Anwaltssozietät**
**Maximilianstrasse 58**
**80538 München (DE)**

(56) References cited:
**EP-A- 0 141 997**   **EP-A- 0 476 938**
**AU-B- 519 272**   **FR-A- 2 272 161**
**US-A- 4 830 736**   **US-A- 5 368 722**

• **CHEMICAL ENGENEERING, vol.93, no.9, 12 May**
**1986, NEW YORK pages 97 - 101 FULTON**
**'SELECTING THE CATALYST CONFIGURATION'**

**Description**

Generally, the present invention relates to a fixed bed catalyst system for use in hydrotreating processes, and, in particular, a catalyst system comprising a physical mixture of catalyst particles with a large void and particles with a low void.

Hydrotreating of crude feedstocks encounters frequently problems caused by solid contaminants in the feed-stock.

In many refineries, serious problems arise in hydrotreating reactors showing liquid maldistribution and pressure drop build-up due to plugging of the reactors by those solid contaminants.

If solid material of certain particle size is present in a feed-stock, it will deposit in the catalyst bed. An appropriate grading technology is necessary in order to control the deposition in such a way that the life of the catalyst charge is determined by lack of catalyst activity rather than flow restrictions or reactor plugging. Traditionally control of reactor contamination has been made by applying a grading of large particles on top of smaller particles. Both particle sizes used have almost the same void fraction, but the average size of the void spaces is different and the ability to retain deposits is thus different. By such a grading procedure, the deposits are allowed to penetrate deeper in the bed, and a higher contaminant uptake can, therefore, be attained before the catalyst bed is plugged off. The particle size procedure has the obvious draw back that the part of the reactor, where the accumulation occurs, has a limited capacity for contaminant storage. Exchange of large low void material with high void material, e.g. rings in the reactor top, has to a large extent improved the capacity for contaminant storage without having bed plugging. However, situations exists where the size of the contaminant particles is small and/or the feedstock contaminant level is high,
and where a layer of large particles/high void material does not have adequate ability to retain contaminants and plugging of subsequent layers can thus occur unless very large volumes of large particles/high void material are used.

Based on the above observations, improved control of deposition of solid material in a fixed catalyst bed over a larger volume in the bed is obtained by appropriate void grading of the catalyst bed with catalyst particles having different void and optionally different activity. I have found that appropriate void grading is obtained by physically mixing catalyst particles having a large void volume and particles with a low void volume in different mixing ratios in fixed bed catalyst system, and, thereby, improving performance of, in particular, hydrotreating reactors.

Accordingly, this invention provides a catalyst system for the hydrotreating of a hydrocarbon feedstock, comprising a physical mixture of high void catalyst particles and low void catalyst particles, wherein the particles are mixed in different amounts in different layers of the catalyst bed so as to obtain within the fixed bed catalyst system a layered structure with different layers having different mixing ratios of the high and low void particles. The catalyst system according to the invention is defined in claim 1.

Suitable catalyst particles for use in the invention comprise particles in the shape of cylinders, threelobes, spheres and similar compact bodies with a low void. Catalyst particles having a large void are typically selected from rings, wagon wheels and bodies with a plurality of internal channels. The active catalytic material supported on those particles comprises Group VI metals, in particular molybdenum and/or tungsten, and Group VIII metals, preferably nickel and/or cobalt.

The invention provides, furthermore, a process for the hydrotreating of a hydrocarbon feedstock, wherein the feedstock being passed through a fixed bed catalyst system of a hydrotreating catalyst comprising a physical mixture of high void catalyst particles and low void catalyst particles, which particles are mixed in different amounts in different layers of the catalyst bed so as to obtain within the fixed bed catalyst system a layered structure with different layers having different mixing ratios of the high and low void particles.

**Example 1**

Example 1 shows the variations of physical characteristics of solid compositions comprising the two different catalyst shapes, when the mixing ratios are varied. Such catalyst beds are disclosed in DK-A-861/92.

Catalyst particles of two different shapes were mixed thoroughly using a rifle divider. A number of different mixing ratios were used ranging from 0 to 100 wt% rings mixed with threelobe particles dried at 250°C for two hours before mixing. After mixing, the particles were dried again and the bulk densities were determined using the ASTM D4180-82 method.

In the experiment the following catalyst types were used, which are commercially available from Haldor Topsøe A/S, Denmark:

1/8" ring TK 551 (ringshaped particles)

1/16" TL TK 551 (threelobeshaped particles)

The size of the threelobe particles was selected so that no threelobe particle could enter the holes of the rings.

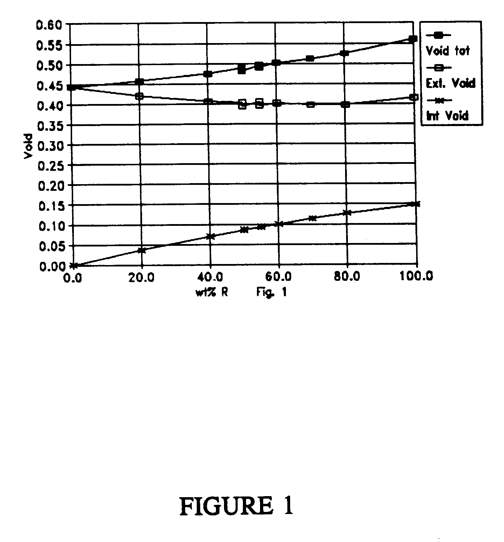

Figure 1 shows graphically the results of the bulk density determinations. From the bulk densities measured and the particle density data, the void volume was determined for the various samples. Figure 1 gives a graphical presentation of the data in Table 1. As apparent from Figure 1, the increase in the void volume by increasing the percentage of rings in the mixture, deviates from a straight line. This indicates that the small particles have a tendency to fill the interstices between the larger particles. This phenomenon is further illustrated if the void volume is specified by:

$E_i$:       Void volume in the holes of the rings, internal void.

$E_y$:       Void volume, i.e. interstices in between the particles, external void.

## TABLE 1

**Void Volume Calculation/Mixtures of Ringshaped and Threelobe Particles**

Particle density 1.28
Outer ringradius (ry)/inner ringradius (ri) 2
Length void 0.42 cm
Area threelobe 0.014213 cm²
Inner ringradius 0.08 cm
Length ring 0.54 cm
Length threelobe 0.42 cm

| wt% rings/mixture | Filling-Density | Etot | Ey | Ei | No. of part./g | rc | rs |
|---|---|---|---|---|---|---|---|
| 100 | 0.56 | 0.560 | 0.414 | 0.147 | 24.0 | 2.70 | 2.84 |
| 80 | 0.61 | 0.524 | 0.397 | 0.127 | 45.4 | 1.85 | 2.21 |
| 70 | 0.63 | 0.511 | 0.397 | 0.114 | 56.1 | 1.64 | 2.04 |
| 60 | 0.64 | 0.501 | 0.401 | 0.100 | 66.7 | 1.50 | 1.92 |
| 55 | 0.65 | 0.490 | 0.396 | 0.094 | 72.1 | 1.42 | 1.85 |
| 55 | 0.65 | 0.496 | 0.404 | 0.092 | 72.1 | 1.44 | 1.87 |
| 50 | 0.67 | 0.480 | 0.394 | 0.087 | 77.4 | 1.35 | 1.79 |
| 50 | 0.66 | 0.488 | 0.403 | 0.085 | 77.4 | 1.38 | 1.81 |
| 40 | 0.67 | 0.475 | 0.405 | 0.070 | 88.1 | 1.28 | 1.72 |
| 20 | 0.70 | 0.456 | 0.420 | 0.036 | 109.5 | 1.15 | 1.60 |
| 0 | 0.71 | 0.442 | 0.442 | 0.000 | 130.9 | 1.06 | 1.53 |

rc: Average voidradius in mm - cylindrical void;
rs: Average voidradius in mm - spherical void;

Total void: $E_{tot} = 1 - 1/\delta bulk$
Inner void: $E_i = (wt\%\ ring)/100/\delta part \cdot (1/((ry/ri)^2 - 1)) \cdot \delta bulk$
Outer void: $E_y = E_{tot} - E_i$

The values of $E_i$ and $E_y$ at different mixing ratio are summarized in Table 1 and shown in Figure 1. $E_y$ has its maximum value of 100% rings or 100% threelobe in the mixture. Furthermore, $E_y$ has a minimum value indicating that small particles tend to fill the void among larger particles.

It is not possible to make an exact calculation of the average size of the void volume. However, certain assumptions, concerning the shape of the voids as well as the number of voids, make it possible to determine the average size of the void volume, when assuming that:

the number of voids in a catalyst bed is equal to the number of catalyst particles, and
voids are either cylindrical with a length equal to the average length of the shortest catalyst particle type (the threelobe) or spherical.

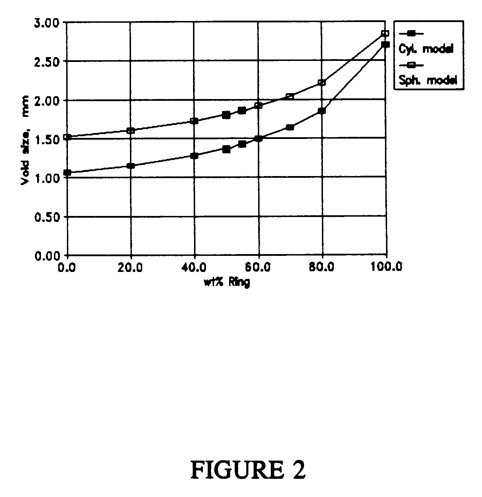

Based on the above assumptions, the average size of the void volume has been calculated, the results of these calculations are illustrated in Figure 2. As apparent from Figure 2, the change in the total volume void for a given addition of rings to the mixture is different depending on the composition of the mixture. At low percentages of rings, an addition of rings only gives a minor increase in the average size of void volume, whereas at high percentages of rings (>60%), a given addition of rings gives a high increase in void volume.

It is indicated by the above results that void graded catalyst systems are useful in industrial units, since void grading allows both a smooth change from high void material (rings) to low void material (threelobes) and provides a smooth change in filtering effect. The filtering effect is improved through small voids in the graded catalyst bed by addition of a small fraction of low void particles, e.g. threelobes to the ring-shaped particles, which reduces the average size of the void significantly. Void grading is preferably obtained by mixing of ringshaped particles and threelobes. A void graded catalyst bed with maximum distribution of the filtering effect is provided within a void graded catalyst bed having layers of 100, 85, 60, 0 wt% ring-shaped particles mixed with threelobe particles.

In such a bed, the amount of contaminants removed from a feedstock through deposition on particles is found to be of a first order with respect to the feedstock contaminant level C ($kg/m^3$):

$$-\lambda C = \delta C/\delta L \tag{1}$$

Integration of eq. 1 over the length of a plug flow reactor gives:

$$C = C_0 \cdot EXP(-\lambda \cdot L) \tag{2}$$

where L is the distance from the reactor top in m, $C_0$ and C is the contaminant concentration at the inlet end at a distance of L meters from the reactor top in $kg/m^3$, and $\lambda$ is the filtration coefficient in $m^{-1}$.

Solid contaminants are deposited in a characteristic fashion in the reactor. Using eq. 2, an equation can be derived that relates the deposited amount to the filtration coefficient:

$$\sigma = C_0 \cdot Q \cdot t \cdot \lambda/A \cdot EXP(-\lambda \cdot L) \tag{3}$$

In eq. 3 $\sigma$ is the amount of solids ($kg/m^3$ catalyst) retained in the catalyst layer L meters from the reactor bed. Q is the liquid flow to the reactor ($m^3/h$), t is the total time on stream (hours), and A is the cross section area of the reactor ($m^2$).

By means of the above equations, solid deposition in a number of different catalyst graded systems were calculated. In the model experiments, a fixed flow rate and suspension amount have been assumed.

**Comparison Example A**

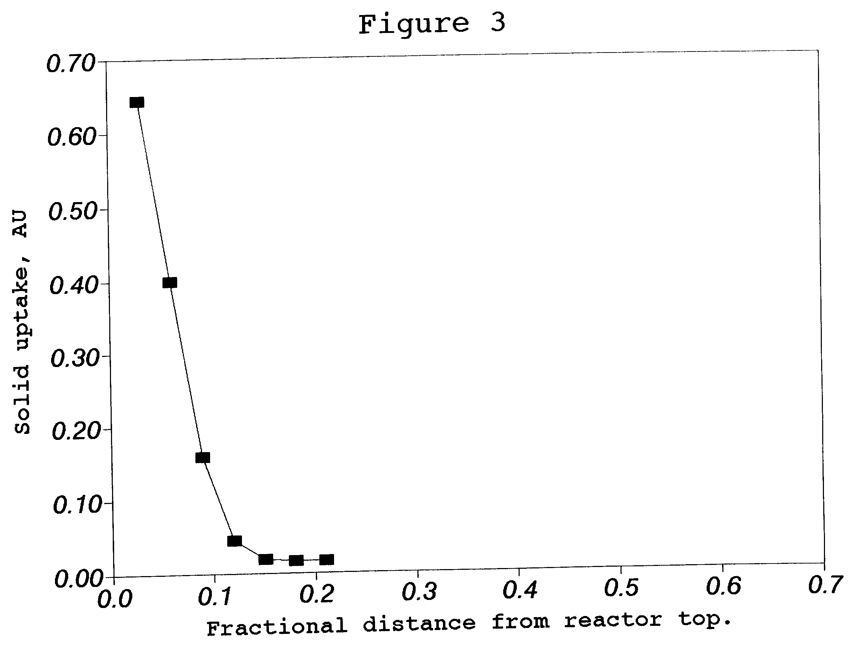

The catalyst bed consists of 1/16" TL particles arranged in the entire reactor volume. It is obvious from the data in Figure 3 that solid deposition only occurs at the top of the catalyst bed. The type of deposition observed in Figure 3 will result in clogging of the free void volume at the top of the bed, resulting in an increasing pressure drop ($\Delta P$). The resistance against contamination in ungraded catalyst beds of the above type is low. The resistance is set relatively to 100% in order to allow comparison with other types of catalyst beds.

**Comparison Example B**

In order to improve resistance against contamination, high void material on the top of the reactor is conventionally used. This improves the capacity for deposition by smoothing the deposition profile. Furthermore, the high void material can secure large quantities of solids until the void volume is reduced to such an extent that a pressure drop occurs.

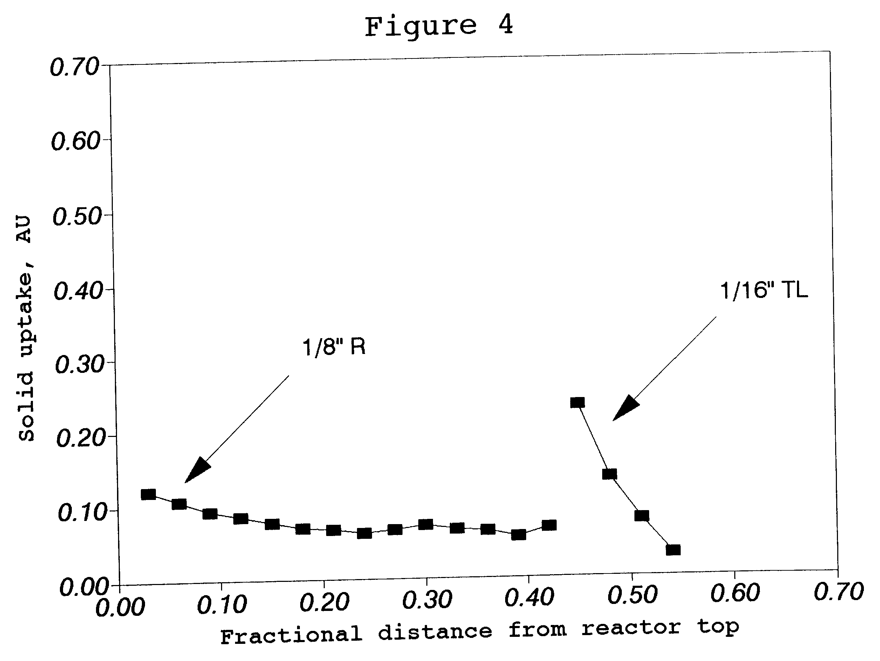

In this Example a conventional two-layer grading was used, consisting of a layer of 1/8" rings arranged on top of a layer of 1/16" TL. Figure 4 shows the deposition profiles obtained in the graded bed. It is observed that the deposition has improved as compared with Example A. However, it is also observed that there is a possibility of catalyst bed blocking on the boundary between the two layers, since a high deposition occurs at the top of the low void 1/16" TL layer. It is also in this boundary area that the reactor is most likely to be blocked. Resistance against contamination in this Example is stronger than found in Example A. As calculated by the above aquations, it is possible to accumulate 3.6 times more solids than in the catalyst bed of Example A.

**Example 2**

The deposition of contaminants can be improved substantially by using the void grading technique according to the invention and described in Example 1. A graded catalyst bed was established having a top layer with 100% rings (size 1/8"), subsequent layers with a mixture of 85% rings and 15% threelobes (size 1/16") and 48% rings and 52% threelobes, and at bottom a layer with 100% threelobes.

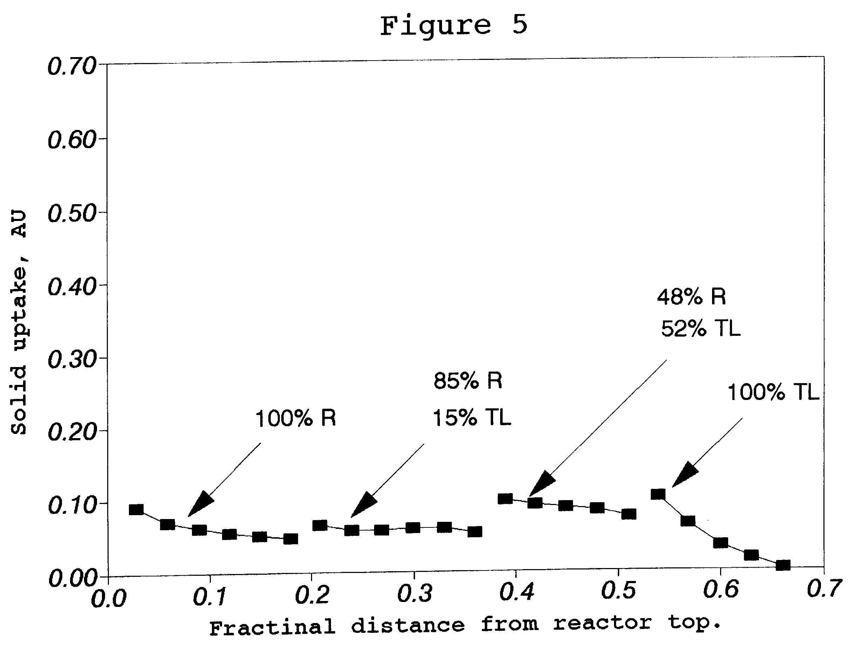

Figure 5 shows the contamination profile obtained for the void graded bed. The data obtained clearly demonstrate that the deposition profile obtained in the void graded bed allows a much higher contamination rate without clogging the catalyst bed.

Resistance against contamination is increased by 7.9 times as compared to that of a catalyst bed with only threelobe particles, as in Example A.

Void grading can, furthermore, be combined with activity grading by mixing particles with different catalyst activity. Activity grading is preferred in reactor the treatment of a feedstock, where solids are formed during catalytic reactions on the catalyst particles.

**Claims**

1.  A catalyst system for hydrotreating a hydrocarbon feedstock comprising a physical mixture of high void catalyst particles and low void catalyst particles, wherein the particles are mixed in different amounts in different layers of the catalyst bed so as to obtain within the fixed bed catalyst system a layered structure with different layers having different mixing ratios of the high and low void particles, wherein the fixed bed catalyst system comprises successive layers comprising a top layer of ring-shaped particles, a bottom layer of threelobe particles and mixed layers of ring-shaped and threelobe particles, and wherein the mixed layers consist of 85 wt% and 48 wt% ring-shaped particles respectively mixed with threelobe particles.

2.  The catalyst system of claim 1, wherein the high void catalyst particles are selected from the group of particles having a shape of rings, wagon wheels and bodies with a plurality of internal channels, and the low void catalyst particles are selected from the group of particles having a shape of cylinders, threelobes and spheres.

3.  A process for hydrotreating a hydrocarbon feedstock wherein the hydrocarbon feedstock is passed through a fixed bed catalyst system of a hydrotreating catalyst as defined in claim 1 or 2.

**Patentansprüche**

1.  Katalysatorsystem für das Hydrotreating eines Kohlenwasserstoff-Einsatzmaterials, umfassend eine physische Mischung von hohlraumreichen Katalysatorteilchen und hohlraumarmen Katalysatorteilchen, wobei die Teilchen in unterschiedlichen Mengen in unterschiedlichen Schichten des Katalysatorbetts gemischt sind, so daß innerhalb des Festbett-Katalysatorsystems eine Schichtstruktur mit unterschiedlichen Schichten, die unterschiedliche Mischverhältnisse der hohlraumreichen und hohlraumarmen Teilchen aufweisen, erhalten wird, wobei das Festbett-Katalysatorsystem aufeinanderfolgende Schichten umfaßt, die eine oberste Schicht aus ringförmigen Teilchen, eine unterste Schicht aus dreilappigen Teilchen und gemischte Schichten von ringförmigen und dreilappigen Teilchen umfassen, und wobei die gemischten Schichten aus 85 Gew.-% bzw. 48 Gew.-% ringförmigen Teilchen, gemischt mit dreilappigen Teilchen, bestehen.

2.  Katalysatorsystem nach Anspruch 1, wobei die hohlraumreichen Katalysatorteilchen ausgewählt sind aus der Gruppe von Teilchen mit einer Gestalt von Ringen, Wagenrädern und Körpern mit einer Mehrzahl von inneren Kanälen und die hohlraumarmen Katalysatorteilchen ausgewählt sind aus der Gruppe von Teilchen mit einer Gestalt von Zylindern, dreilappigen Körpern und Kugeln.

3.  Verfahren zum Hydrotreating eines Kohlenwasserstoff-Einsatzmaterials, wobei das Kohlenwasserstoff-Einsatzmaterial durch ein Festbett-Katalysatorsystem eines Hydrotreating-Katalysators, wie in Anspruch 1 oder 2 definiert, geleitet wird.

**Revendications**

1.  Système de catalyseur pour faire subir un hydrotraitement à une charge d'hydrocarbure comprenant un mélange physique de particules de catalyseur ayant une proportion élevée de vides et des particules de catalyseur ayant une faible proportion de vides, dans lequel les particules sont mélangées, selon différentes proportions, dans différentes couches du lit catalytique afin d'obtenir, à l'intérieur du système de catalyseur à lit fixe, une structure stratifiée avec différentes couches ayant différents rapports de mélange des particules ayant une proportion élevée et faible de vides, dans lequel le système de catalyseur à lit fixe comprend des couches successives comprenant une couche supérieure de particules annulaires, une couche inférieure de particules trilobées et des couches mixtes de particules annulaires et trilobées, et dans lequel les couches mixtes se composent de 85 % en poids et de 48 % en poids de particules annulaires mélangées respectivement à des particules trilobées.

2.  Système de catalyseur selon la revendication 1, dans lequel les particules de catalyseur ayant une proportion élevée de vides sont choisies dans le groupe des particules ayant une forme d'anneau, de roue de chariot et des corps avec une pluralité de canaux intérieurs, et les particules de catalyseur ayant une faible proportion de vides sont choisies dans le groupe des particules ayant une forme de cylindres, une forme à trois lobes et une forme de sphères.

3.  Procédé pour faire subir un hydrotraitement à une charge d'hydrocarbure, dans lequel la charge d'hydrocarbure traverse un système de catalyseur à lit fixe d'un catalyseur d'hydrotraitement tel que défini dans la revendication 1 ou 2.

FIGURE 1

FIGURE 2

Figure 3

## Figure 4

EP 0 651 041 B1

Figure 5

EP 0 651 041 B1